# EUROPÄISCHE PATENTANMELDUNG

(11) **EP 0 865 128 A1**
(43) Veröffentlichungstag der Anmeldung: **16.09.1998**
(21) Anmeldenummer: 98103291.5
(22) Anmeldetag: 25.02.1998
(51) Int. Cl.: H02B 1/052

(54) **Verteilungsanlage**

(30) Priorität: 10.03.1997 DE 19709812
(71) Anmelder: SIEMENS AKTIENGESELLSCHAFT, 80333 München (DE)
(72) Erfinder: Eismann, Georg, 93138 Lappersdorf (DE); Fischer, Elmar, 93051 Regensburg (DE); Schweiger, Reinhard, Dipl.-Ing. (FH), 93059 Regensburg (DE); Weber, Christoph, Dipl.-Ing. (FH), 84034 Landshut (DE)

(57) **Zusammenfassung**

Die Erfindung bezieht sich auf eine Verteilungsanlage, bei der Installationsgeräte (1) auf zumindest einer Tragschiene (2) mittels Halteschieber (3) aufgeschnappt sind und bei der die Einspeisung der Installationsgeräte (1) über Sammelschiene (5) erfolgen kann, wobei jeweils ein Anschlußelement (6) der Sammelschiene (5) in eine Anschlußklemme (8) eines Installationsgerätes eingeführt ist. Es ist vorgesehen, daß die Anschlußklemme (8) um ein Ausmaß öffenbar ist, daß ein Installationsgerät (1) bei seinem Halteschieber (3) in Freistellung von der Tragschiene (2) bei verbleibender Sammelschiene (5) abgenommen werden kann.

## Beschreibung

Die Erfindung bezieht sich auf eine Verteilungsanlage, bei der Installationsgeräte auf zumindest einer Tragschiene mittels Halteschieber aufgeschnappt sind und bei der die Einspeisung der Installationsgeräte über Sammelschiene erfolgen kann, im einzelnen nach Gattungsbegriff von Anspruch 1. Hierbei ist ein Anschlußelement der Sammelschiene in eine Anschlußklemme eines Installationsgerätes eingeführt. Die Anschlußklemme ist um ein Ausmaß öffenbar, daß ein Installationsgerät bei seinem Halteschieber in Freistellung von der Tragschiene bei verbleibender Sammelschiene abgenommen werden kann. Derartige Anschlußklemmen sind bei aufwendiger Drehkonstruktion und zum Anschließen einer Sammelschiene allein bekannt (DE-A1-195 31 115).

Um Verdrahtungsaufwand einzusparen, ist es bei Stromverteiler- und Schaltanlagen, also bei Verteilungsanlagen, vorteilhaft, Sammelschienen einzusetzen. Dadurch kann das sonst aufwendige Querverdrahten mit Drahtbrücken einer oder mehrerer Außenleiter oder Nulleiter zur Einspeisung der einzelnen Schaltgeräte vermieden werden. Zusätzlich zur Verbindung der einzelnen Geräte durch Verschienung sind jedoch die Außenleiter bzw. der Nulleiter mindestens einmal einzuspeisen. Das kann durch zusätzliche Einspeisungsklemmen erfolgen, was jedoch den Nachteil aufweist, daß separate Klemmen in Lagerhaltung und Montage aufwendig sind.

In der Regel verwendet man daher sogenannte Kombiklemmen. Derartige Klemmen können sowohl die Einspeiseleitungen als auch Anschlußelemente der Sammelschiene aufnehmen. Üblicherweise sind derartige Sammelschienen mit kammartigen Anschlußenden versehen, die bei Sicht auf die Verteilungsanlage oberhalb der Einspeiseleitungen liegen. Verdeckte Leitungen haben für den Installateur jedoch vielfältige Nachteile: Beim Anklemmen der Speiseleitungen ist die Klemme schwer zugänglich und es ist nicht sicher erkennbar, ob der Leiter richtig eingeführt ist.

Bei Veränderungen bei der Einspeisung muß deshalb die Sammelschiene in der Regel abgenommen und wieder montiert werden.

Weiter ist es zum Lösen eines Installationsgerätes aus dem Verband in der Regel erforderlich, die Sammelschiene von allen seitlich angereihten Installationsgeräten abzunehmen. Es ist zwar auch eine Verteileranlage bekannt, bei der es mit einer speziellen Sammelschiene und besonderen einzeln steckbaren Anschlußelementen möglich ist, einzelne Installationsgeräte aus dem Verband zu lösen. Derartige Sammelschienen stellen jedoch Sonderkonstruktionen dar (DE-A-40 21 825).

Der Erfindung liegt die Aufgabe zugrunde, eine Verteilungsanlage zu entwickeln, deren Installationsgeräte aus einem Verband seitlich angereihter Installationsgeräte und dort angeschlossener Sammelschiene bei einfachem Aufbau der Anschlußklemmen leichter gelöst werden können.

Die Lösung der geschilderten Aufgabe erfolgt durch eine Verteilungsanlage nach Anspruch 1. Die Anschlußklemme ist um ein Ausmaß öffenbar, daß ein Installationsgerät bei seinem Halteschieber in Freistellung von der Tragschiene bei verbleibender Sammelschiene abgenommen werden kann. Die Anschlußklemme läßt sich also in Abstimmung auf die Dicke der vorgesehenen Anschlußelemente und ihre Länge so weit öffnen, daß das Installationsgerät vom Tragschienenrand bei geöffnetem Halteschieber abgehoben werden kann.

Zumindest eine Anschlußklemme bildet zwei übereinanderliegende Anschlußöffnungen, von denen die untere zum Anschließen von Sammelschienen ausgelegt ist und sich um ein Ausmaß öffnen läßt, welches das doppelte der Dicke anzuschließender Anschlußelemente oder mehr beträgt. Die obere Anschlußöffnung ist dabei derart angeordnet, daß auch bei angeschlossener Sammelschiene die Anschlußöffnung in einer frei zugänglich bleibenden Höhe angeordnet ist. Bei Sicht auf die Verteilungsanlage liegt die obere Anschlußöffnung also vor bzw. oberhalb der unteren Anschlußöffnung. Eine derartige Verteilungsanlage bietet also die Funktion der üblichen Doppelklemme, ermöglicht jedoch leichte Handhabung von Anschlußleitungen zum Einspeisen.

Es ist günstig, wenn die Verteilungsanlage mit Installationsgeräten mit zwei Anschlußöffnungen bestückt ist, wobei die untere Anschlußöffnung für die Sammelschiene in ihrer Öffenbarkeit auf die Freihubhöhe zum Lösen des Installationsgerätes von zumindest einem Tragschienenrand derart abgestimmt ist, daß die Klemme in Offenstellung eine freihebende Hub- oder Kippbewegung mit dem Installationsgerät nicht behindert.

Insbesondere ist eine Verteilungsanlage vorteilhaft, bei der die Anschlußklemmen der Installationsgeräte einen feststehenden Mittelsteg aufweisen, zu dem sich ein Klemmkäfig bewegen läßt. Man kann dann günstige Montageebenen festlegen.

Die Erfindung soll nun anhand von in der Zeichnung grob schematisch wiedergegebenen Ausführungsbeispielen näher erläutert werden:

In FIG 1 ist ein Installationsgerät einer Verteilungsanlage veranschaulicht, das im Bereich der Anschlußklemme aufgebrochen und teilweise im Schnitt wiedergegeben ist. Eine anzuschließende Sammelschiene und ein Einspeiseleiter sind veranschlauchlicht.

In FIG 2 ist eine Verteilungsanlage mit einer Tragschiene und aufgeschnappten Installationsgeräten bei angeschlossener Sammelschiene und einem angeschlossenen Einspeiseleiter perspektivisch wiedergegeben.

In FIG 3 ist ein Installationsgerät mit zwei bewegbaren Halteschiebern veranschaulicht, wobei der Sammelschienenanschluß, in einer Verteilungsanlage bei Wandeinbau veranschaulicht, von der unteren Zugangsseite vorgesehen ist.

In FIG 4 ist ein Installationsgerät mit zwei bewegbaren Halteschiebern wiedergegeben, wobei der Sammelschienenanschluß an der oberen Zugangsseite vorgesehen ist.

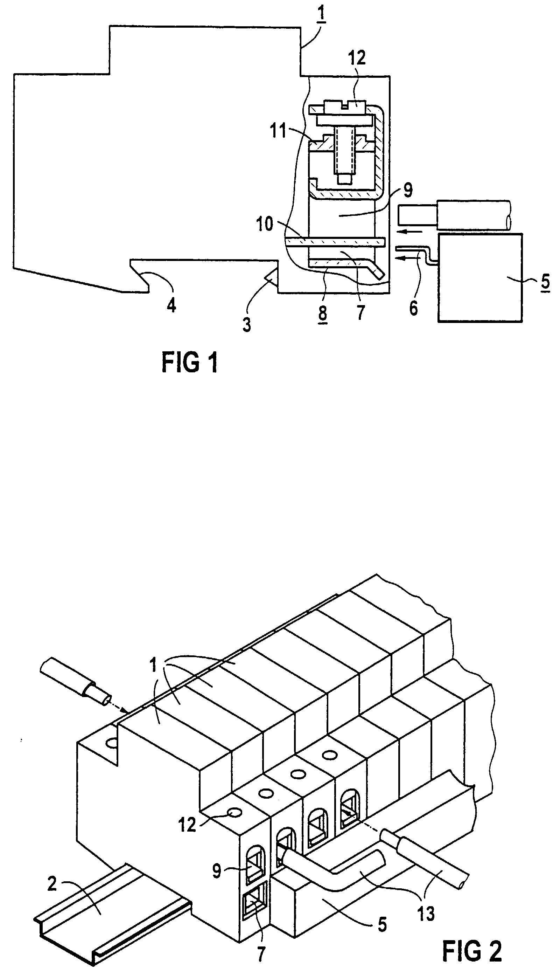

Das Installationsgerät 1 einer Verteilungsanlage nach FIG 1 kann auf einer Tragschiene 2 nach FIG 2 aufgeschnappt werden. Hierzu kann der Halteschieber 3 nach FIG 1 in eine Freistellung zurückgezogen werden und in eine Haltestellung bewegt werden. Auf der Gegenseite zum Halteschieber ist eine Haltekontur 4 ausgebildet. Verständlicherweise kann man auch mit zwei Halteschiebern arbeiten, wobei dann der gegenüberliegende Halteschieber die Haltekontur bildet. Die Installationsgeräte 1 können sogenannte Reiheneinbaugeräte sein oder Geräte wie Leitungsschutzschalter, Fehlerstromschutzschalter und andere Geräte. Zum Anschließen der Sammelschiene 5 dienen Anschlußelemente 6, die in einer Anschlußöffnung 7 zum Anschließen von Sammelschienen eingeführt werden können. Im Ausführungsbeispiel ist die Anschlußklemme 8 mit zwei übereinanderliegenden Anschlußöffnungen versehen, der oberen Anschlußöffnung 9 zum Einführen von Leitern und der unteren Anschlußöffnung 7 zum Einführen eines Anschlußelementes 6 einer Sammelschiene 5. Im Ausführungsbeispiel weist die Anschlußklemme einen ortsfesten feststehenden Mittelsteg 10 auf, um den sich ein Klemmkäfig 11 mittels einer Klemmschraube 12 bewegen läßt. Derartige Anschlußklemmen sind im Prinzip als sogenannte Fahrstuhlklemmen bekannt. Wesentlich ist hier jedoch, daß sich die Anschlußklemme hinsichtlich ihrer Anschlußöffnung 7 zum Anschließen von Sammelschienen um ein Ausmaß öffnen läßt, daß ein Installationsgerät bei seinem Halteschieber in Freistellung von der Tragschiene abgenommen werden kann. Daß das Installationsgerät also soweit angehoben und erforderlichenfalls gekippt werden kann, daß es vom Anschlußelement 6 der Sammelschiene 5 oberhalb des Tragschienenrandes freikommt. Eine Anschlußklemme mit zwei Anschlußöffnungen ist vorteilhaft, um keine Sonderklemmen zu benötigen, um Einspeiseleiter in den Verband der Installationsgeräte einspeisen zu können. Es ist dann günstig, wenn die obere Anschlußöffnung 9 für Leiter oberhalb anzuschließender Sammelschienen 5 ausgebildet bzw. angeordnet ist. Günstige Positionen werden durch einen ortsfesten Mittelsteg 10 erleichtert.

In der Praxis hat sich gezeigt, daß es günstig ist, wenn sich die Anschlußöffnung 7 für Sammelschienen um ein Ausmaß öffnen läßt, welches das doppelte der Dicke anzuschließender Anschlußelemente 6 oder mehr beträgt.

In FIG 2 sind Installationsgeräte 1 auf einer Tragschiene 2 angeordnet, wobei die Installationsgeräte an einer Sammelschiene 5 angeschlossen sind. Als Sammelschienen eignen sich hierbei sowohl übliche Sammelschienen als auch Sonderkonstruktionen. Einspeiseleiter 13 können in der oberen Anschlußöffnung 9 für Leiter leicht und gut sichtbar angeschlossen werden.

An einem Wandeinbau orientiert, können die Installationsgeräte 1 bei entsprechend vorgesehenen Anschlußklemmen 8 sowohl auf der unteren als auch auf der oberen Zugangsseite angeschlossen werden. Anstelle von Sammelschienen können auch Leiter in die Anschlußöffnungen 7, die an sich für Sammelschienen vorgesehen sind, eingeführt werden. Dadurch ist es bei sogenannten Fahrstuhlklemmen möglich, mehrere große Leiter anzuschließen, auch unterschiedlichen Querschnitts.

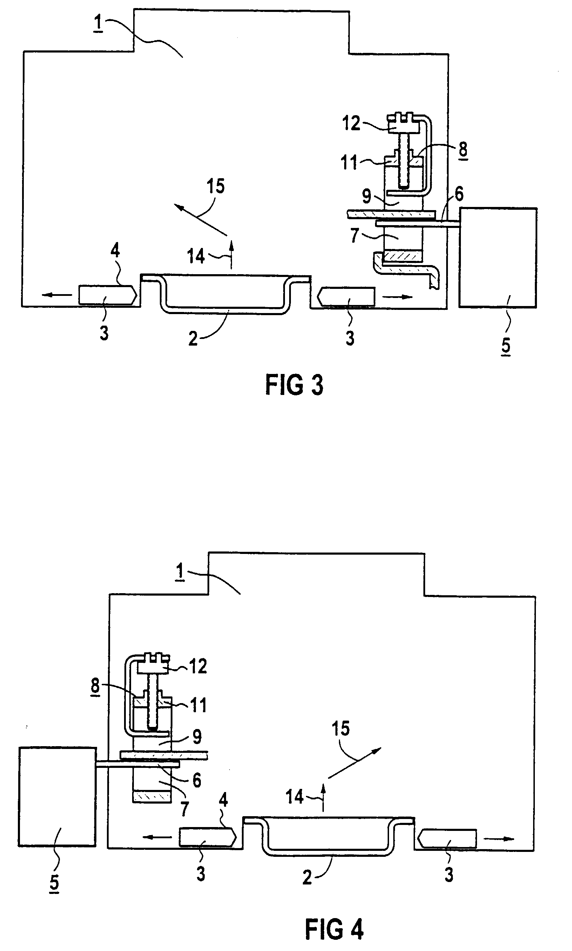

In den FIG 3 und 4 sind Bewegungspfeile 14 und 15 für einen Freihub des Installationsgeräts veranschaulicht. Bei zwei beweglichen Halteschiebern 3 und also einer beweglichen Haltekontur 4, braucht die Anschlußklemme nicht so weit öffenbar zu sein, wie bei einem beweglichen Halteschieber und einer feststehenden Haltekontur 4.

## Patentansprüche

1. Verteilungsanlage, bei der Installationsgeräte (1) auf zumindest einer Tragschiene (2) mittels Halteschieber (3) aufgeschnappt sind und bei der die Einspeisung der Installationsgeräte (1) über Sammelschiene (5) erfolgen kann, wobei jeweils ein Anschlußelement (6) der Sammelschiene (5) in eine Anschlußklemme (8) eines Installationsgerätes eingeführt ist, und die Anschlußklemme (8) um ein Ausmaß öffenbar ist, daß ein Installationsgerät (1) bei seinem Halteschieber (3) in Freistellung von der Tragschiene (2) bei verbleibender Sammelschiene (5) abgenommen werden kann,
**dadurch gekennzeichnet**,
daß zumindest eine Anschlußklemme (8) zwei übereinanderliegende Anschlußöffnungen (9,7) bildet, von denen die untere (7) zum Anschließen von Sammelschienen (5) ausgelegt ist und sich um ein Ausmaß öffnen läßt, welches das doppelte der Dicke anzuschließender Anschlußelemente (6) oder mehr beträgt und wobei die obere Anschlußöffnung (9) auch bei angeschlossener Sammelschiene (5) in einer frei zugänglich bleibenden Höhe angeordnet ist.

2. Verteilungsanlage nach Anspruch 1,
**dadurch gekennzeichnet**,
daß das Ausmaß der Öffenbarkeit der unteren Anschlußöffnung (7) auf die Freihubhöhe zum Lösen des Installationsgerätes (1) von zumindest einem Tragschienenrand derart abgestimmt ist, daß die Klemme in Offenstellung eine freihebende Hub- oder Kippbewegung mit dem Installationsgerät (1) nicht behindert.

3. Verteilungsanlage nach Anspruch 1,
**dadurch gekennzeichnet,** daß die Anschlußklemme (8) einen feststehenden Mittelsteg (10) aufweist, zu dem sich ein Klemmkäfig (11) bewegen läßt.
